(19) Europäisches Patentamt / European Patent Office / Office européen des brevets

(11) **EP 1 795 334 B1**

(12) **EUROPEAN PATENT SPECIFICATION**

(45) Date of publication and mention
of the grant of the patent:
**21.10.2009 Bulletin 2009/43**

(51) Int Cl.:
*B30B 11/00* (2006.01)    *B01J 3/06* (2006.01)
*F04B 37/12* (2006.01)    *F04B 3/00* (2006.01)

(21) Application number: **06124984.3**

(22) Date of filing: **29.11.2006**

(54) **System for providing very high pressure with a cascade of several high pressure pump chambers placed one within the other**

System zur Erzeugung von sehr hohen Drücken mit einer Kaskade von mehreren Hochdruckpumpkammern die jeweils eine andere Pumpkammer umschliessen

Système pour produire une tres haute pression avec une cascade de plusieurs chambres de pompage à haute pression qui s'emboîtent

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.11.2005 CL 200503107**
**29.11.2005 CL 200503108**
**06.09.2006 CL 200602331**

(43) Date of publication of application:
**13.06.2007 Bulletin 2007/24**

(73) Proprietor: **Mulet Martinez, Mauricio Eduardo**
**Vallenar, III Region (CL)**

(72) Inventor: **Mulet Martinez, Mauricio Eduardo**
**Vallenar, III Region (CL)**

(74) Representative: **Carpintero Lopez, Francisco et al**
**Herrero & Asociados, S.L.**
**Alcalá 35**
**28014 Madrid (ES)**

(56) References cited:
**US-A1- 2 544 414**    **US-A1- 3 191 383**
**US-A1- 3 379 043**    **US-A1- 2003 118 459**

• **HALL, H TRACY: "Chapter II: High-Pressure Techniques" TECHNIQUES OF CHEMISTRY, VOL. IX, CHEMICAL EXPERIMENTATION UNDER EXTREME CONDITIONS (EDS. WEISSBERGER, A; ROSSITER, B), 1980, pages 9-72, XP002426221 John Wiley & Sons Inc. (New York)**

## Description

The present invention refers to a multichamber intended to obtain high pressure, said invention comprises several levels and among said levels "motor pumps" are arrenged. Each chamber comprises in its inner part another chamber with a "motor pump" or pumping system placed towards the inner part, where a third chamber with its pumping system is located towards the inner part and so on.

Background of the invention

Several already-known inventions use as basis for generating pressure a force which is increased through section or area reduction, thus resulting in a small volume, which becomes smaller if higher pressure is intended.

There are several types of devices for obtaining high pressure. According to 'Techniques of Chemistry' by Weissberger & Rossiter there are 4 basic devices for obtaining high pressure, i.e., piston-cylinder assembly, Bridgman anvil, belt apparatus, and multianvil apparatus, where the remaining known devices should be considered as variations of one of said 4 options. The document also mentions hydraulic presses comprising a two-piston system or piston-cylinder apparatus of 5 stages in order to obtain high pressures, where this latter involves certain difficulties in order to carry out measurements in the highest pressure zone. It is also indicated that these devices used solid or solid-fluid combinations for obtaining the required pressures. In all these cases an external force is applied for driving said assemblies and obtaining the intended high pressures.

The state of the art considers the "diamond anvil cell "technique" which uses ultra or extreme high pressure at an experimental level, as the general condition generated by extreme high pressures reaches a very small volume, as the sample can be stored between two diamonds, one on top and the other on the bottom, surrounded by a foil. This is experimentally used to study semi-conductors, superconductors and the variety of characteristics presented by different material under extreme pressure conditions, it is also used to simulate the pressure conditions different materials are subject in the crust of the earth, also it is used in the manufacture of powdered diamond, etc.

The manufacture of sinterized components can also be mentioned. The material which makes the part is ground, it can be made of different compositions which are mixed, then they are placed in elements which act as molds and the subject to pressure. This has an inconvenient, that parts made of steel become porous, sacrificing the resistance as they have the serious limiting of pressure. It is also used with polymeric material for the manufacture of parts which are not subject to traction forces.

There are older mechanisms than the "diamond anvil", and said mechanisms do not use diamond, but large hydraulic cylinders forming high-pressure presses to generate high pressures measured as cubic millimeters.

US 2,544,414 relates to high-pressure apparatus including apparatus to heat specimens to high temperature. It refers to a press compressing specimens between a massive steel base and a cover, which is pressed over said base by a direct force exerted on nuts, which when rotate move through four axes thus bringing the cover nearer the base. The cover transmits the generated pressure to a plurality of circular steel plates surrounding and reinforcing a central cavity forming the press mold. In this case the result is reached by generating external efforts on the axes elements.

US 3,379,043 on which the preambles of claims 1 and 4 are based describes systems for obtaining high pressure by using multiple-stages devices, wherein a cylinder is surrounded by a first pressurized chamber, which is also surrounded by a second pressurized chamber, etc. In this case the.invention object uses the principle of applying external forces in order to counteract the internal pressure-generated force. A plurality of cylinders is provided, which can conduct fluid from an internal cylinder to an external one, thus confining pressurized fluid in each of them, and said pressure will be compared with a decreasing pressure in each of the successive external cylinders. In this case only one piston exerts the external force to pressurize different cylinders or pressurized chambers.

BRIEF DESCRIPTION OF THE INVENTION

The invention is defined in the independent claims 1 and 4. Some embodiments thereof are defined in the dependent claims.

In the present invention pressure is obtained by iterating elementary motor pumps and through said iteration any desired pressure can be obtained.

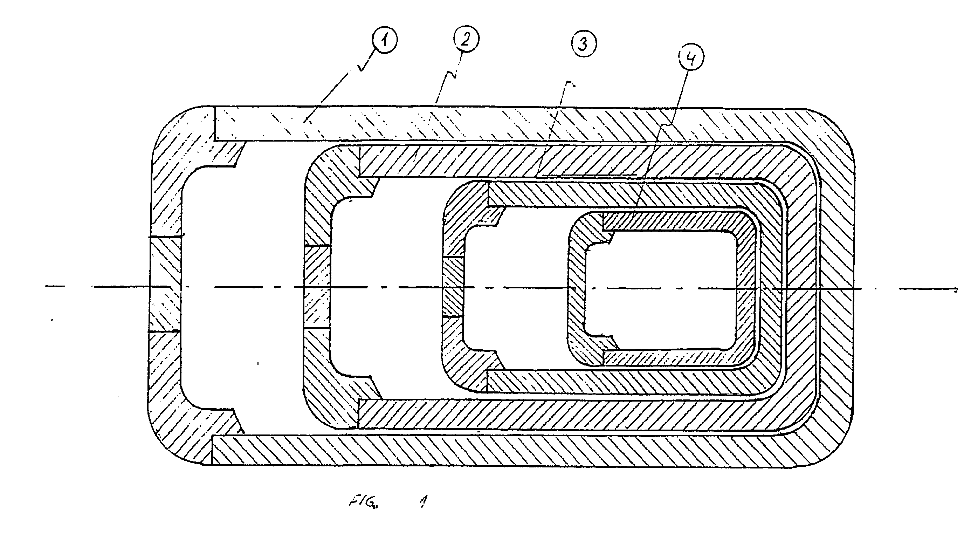

Given a pressure P1, which can be obtained from one chamber or vessel 1 (figure 1), the system generates conditions so that in the environment under pressure P1, by using an assembly, which consists of a "motor" or propelling part and a "pumping" element, a pressure P2 is obtained, which is higher than P1 and the pressurized fluid is stored in a new chamber or vessel 2 located in the inside of chamber 1. Once chamber 2 is under pressure P2, the operation is repeated by using a second "motor pump" which is intended to fill a chamber 3. The operation is repeated as many times as required. It shall be noted that a chamber inside another chamber and so on can resist high pressures, without being restricted by the material resistance.

Volumes at high pressure can be used to manufacture ultra high pressure, sintered material parts, manufacture of parts from new materials like synthetic diamond, material manufacture for pharmaceutical products, hydrowasher using this new technique to increase its pressure, etc.

## DETAILED DESCRIPTION OF THE INVENTION

Hereunder some concept will be explained in order to ease the description of the invention intended to be protected:

1. Concentric chambers to resists ultra high pressure.
2. Method for generating high pressure by iterating elemental motor pump.
3. Alternative method for generating high pressure by iteration.
4. Double concentric chambers.

## 1. Concentric chambers to resists ultra high pressure.

First, an intuitive example shall be illustrated in order to demonstrate that a steel chamber can resist higher pressure than the steel tensile force.

It can be appreciated the reaction of a balloon within another balloon and so on. A balloon is provided and it is inflated until reaching 3 liters, under estimated pressure of 2.0 psi (lb/pulg$^2$). If the ballon is inflated some more it can explode, if its resistance is 2.5. psi. What happens if the environmental pressure is increased in 2.0 psi, the balloon becomes smaller.

Accordingly more air can be filled into the balloon so that it retrives the initial 3 liters. Again, if in the existing environment the pressure is increased in 2,0 psi, the balloon becomes smaller again. Then more air can be filled into the balloon so that it retrives the initial 3 Its. This operation can be repeated until reaching a ballon resisting 50.0 psi, the volume of 3 its is kept, whereas the existing environment is under a pressure of 48 psi.

If another balloon is available, and it is larger than the first one, this later can be inserted in the former, and the "external" balloon is such inflated that it reaches a pressure of 48 psi in the inside. Both in the inner part as in the outer one the original balloon is under a pressure of 46.0 psi, since the inserted balloon is inflated with 2.0 psi further to the ones of the middle part. Afterward another balloon is provided and then another one until reaching at atmospheric pressure a ballon comprising air at 2.0 psi and an inserted balloon inflated with further 2.0 psi, i.e., 4.0 psi. And another balloon in the inside, wich comprises further 2.0 psi and another balloon until having a last balloon comprising 50 psi.

In summary none balloon under atmospheric conditions resists 50 psi, since its resistance was defined as 2.5 psi. But it does resist 50 psi when having as protection another balloons resisting 2.5 psi.

If steel vessels or chambers are used instead of balloons, a result of 20 or 30 chambers resisting 30,000 kg/cm$^2$ for even more can be obtained.

## CILINDRICAL CHAMBERS

Figure 1: Shows a, multichamber system without the pressure-increasing system. it corresponds to a simple multichamber, i.e. a chamber within another one, and so on. It can have small punctures or gaps, (not shown).

Cylindrical vessels or chambers with semi-spherical ends are shown in the following diagram. It shall be indicated that if the chambers were spherical they would resist a higher pressure. The external diameter of a chamber is slightly smaller than the internal diameter of the chamber arranged to the outside directly, so that they can be mounted thereon.

In the diagram illustrating efforts, width or depth is unitary. The used material is steel, and its tensile strength S is similar to 3,000 kg/cm$^2$, whereas the thin wall thickness is of 1/10 cylinder diameter or less.

Chamber 1.

P0: Zero external pressure
P1: Resisted pressure
D1: External diameter
S: Wall tension

$$P1 \times 0.8 \times D1 = P0 \times D1 + 2 \times S \times 0,1 \times D1; \; y \; P0 = 0$$

$$P1 = 0.25 \times S$$

Chamber 2

Chamber 2 which is arranged whithin chamber 1, has an external diameter slightly smaller than the internal diameter of chamber 1. For calculating purposes they are considered as having similar sizes.

The pressure in the second chamber is:

$$P2 \times 0.8 \times D2 = P1 \times D2 + S \times 0,2 \times D2$$

$$P2 = 0.25/0.8 \times S + 0.25 \times S; \; P2 = 0.5625 \times S$$

Pressure P2 was obtained by means of a piston and a ram arranged within chamber 1. the reason why pressure can be increased from chamber 1 to chamber 2 will be not demonstrate herewith, since the aim is directed to verify the chamber resistance, Only as reference it will be indicated that maximum pressure that can be generated with a piston whithin the chamber is similar to 0.8 x S, plus the chamber pressure.

The internal diameter of chamber 2 is slightly larger that the external diameter of chamber 3. However, for calculation purposes they will be considered as having similar sizes. Then;

$$P3 \times 0.8 \times D3 = 0.5625 \times S \times D3 + S \times 0.2 \times D3$$

$$P3 = 0.5625/0.8 \times S + 0.25 \times S; P3 = 0.953 \times S$$

likewise;

$$P4 = 1.44 \times S, \text{ with } D4 = 0.8^{**}3 \times D1$$

$$P5 = 2.05 \times S, D5 = 0.8^{**}4 \times D1$$

$$P6 = 2.81 \times S, D6 = 0.8^{**}5 \times D1$$

Using the above-indicated methodology: P7 = 3.77 x S.

Differential pressure regarding the preceding chamber is of 0.96 x S, which is higher than 0.8 x S indicated as limit value. Accordingly, the following chambers will show a known differential pressure equal to 0.8 x S and the thickness of the chamber walls will be adjusted. It will be diminished until wall stress is similar to the others, i.e., similar to S. If this provision is followed, and the thickness of the chamber walls is equal to 0.1 x D, they would show a stress inferior to S, and the internal diameter is unnecessarily dimished. Then;

$$P7 = 3.61 \times S$$

$$P8 = 4.41 \times S$$

$$.....$$

$$Pn = (4.41 + (n - 8) \times 0.8) \times S$$

If n=20, then P20 = 13 x S = 39,000 kg/cm$^2$, wich exceeds the steel resistance. Then it is verified that a multichamber or a steel chamber easily resists a tensile pressure not resisted by steel itself, provided that the involved chamber is enclosed in another chamber, which is also enclosed by another chamber, and so on, until reaching a last chamber that resists "normal" pressures.

## 2. Method 1 for generating high pressure by iterating elementary motor pumps.

Hereunder some methods for generating pressure over pressure, pressure over pressure and so on will be shown.

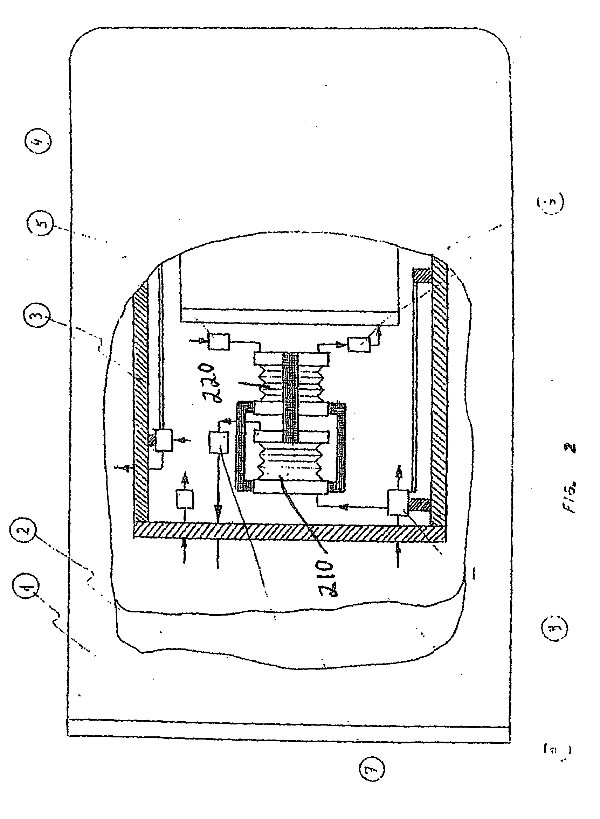

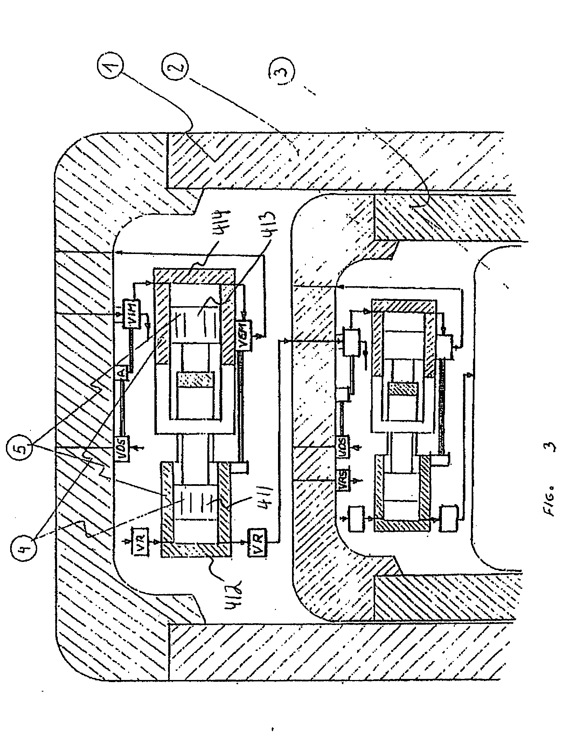

In Fig. 3 a more realistic multichamber is shown, where cylinders are interconnected parallel to bellows of Fig. 2. (3 paragraphs was moved to the end of the description)

The fact of obtaining pressure by iterating elementary motor pumps is a principle not described in the state of the art, through which any pressure by iteration can be obtained. Given a pressure P1, which can be obtained by means of a pump, the systems generates conditions so that in the environment under pressure P1, by using a new "motor" or propelling part and a "pumping" element, pressures P2 are obtained, which are higher than P1 and the pressurized fluid is housed in a new vessel 2 located in the inside of vessel 1. Once the vessel 2 is under pressure P2, the operation is repeated by using a new "motor pump" which is intended to fill a vessel 3. The operation is repeated as many times as desired. It shall be considered that a vessel inside another vessel and so on, can resist any pressure, without being restricted by the material resistence.

In more detail, it is considered a pump consisting of a piston, which takes a fluid under atmospheric pressure and pumps it to a closed vessel or chamber. Said vessel or chamber comprises other smaller chamber in its inside, wich have motor pump systems, pistons, valves, etc. When pressure P is equal or less than a predetermined pressure P1, the fluid only flows to the inner part of the chamber 1 but out from the piston of the motor pump 1. However, after several pumping steps, and as pressure increases and it exceeds P1, the fluid flows into chamber 1 to the inner part of the propelling piston of the motor pump 1, passing by an inlet valve denominated motor inlet valv (VIM) actuated by a differential pressure sensor CDP (A). When the propelling piston begins expand due to the fluid coming from chamber 1, the pump piston also expands, which is linked to the propelling piston currently. When the pump piston expands, it takes fluid from chamber 1 through a retention valve (RV).When the pistons are filled, the propelling piston takes pressurized fluid from the external pump or from the motor pump arranged in the preceding chamber, and the piston takes fluid from the chamber in which it is located. Therefore, the propelling piston shall be discharged, which comprises a motor outlet valve (VEM) and said valve is opened and it discharges the fluid to the outside under low pressure, when the piston is filled. The separation distance between pistons actuates this system, when the motor outlet valve reaches a maximum value it opens and it is closed when it reaches a minimum value.

The pump piston can pump the fluid with a pressure higher than P1, since it operates actuated by the propelling piston exhibiting a pressure P1, thus discharging at low pressure. There is another chamber, chamber 2, within chamber 1, and it can accept fluid with higher pressure than P1. Then the pump piston discharges into chamber 2 passing through a retention valv.

As all chambers the chamber 2 comprises a simple retention valve (VRS) such that fluid can come in, but it cannot leave, and it further comprises a discharge or security valve (VDS), such that if pressure within the chamber exceeds a predetermined pressure value, it discharges fluid into the preceding chamber.

These valves are not connected to the pistons, since they only connect two chambers, where the inner chamber can show a higher pressure than the outer one, but the outer chamber cannot exhibit a higher pressure, than the inner one. The other valve corresponds to a security valve such that differential pressure regarding the preceding chamber is too noticeable, said valve opens and discharges some fluid.

To chamber 2, which is analogous to chamber 1, arrives the first pumping performed by the pump piston of chamber 1, i.e., motor pump 1. The first pumping arriving to chamber 2 also arrives to a motor inlet valve (VIM) and as pressure is inferior to P2, other predetermined value is not sufficient to access to the motor pump 2; therefore, the process is stopped.

Regarding chamber 1, it reduces the pressure to a value slightly inferior to P1, since it discharged both pistons, the propelling piston discharges to the outside at low pressure, whereas the pump piston discharges to chamber 2. Accordingly, other pumping is sent from the external pump and this time it goes out from the propelling piston, since the pressure is slightly inferior to P1. By means of an additional pumping, once P1 is retrived, the fluid comes into the inner part of the propelling piston 1 to move the pump piston 1, thus another pumping reaches chamber 2.

After repeating said process, P1 will be in chamber 1 and P2 will be in chamber 2. An additional pumping will then allow the flow inlet into chamber 3, which is arrenged within chamber 2, and this sequence is repeated as many times as required in order to retrive the pressure in chambers 2 and 1, until reaching a pressure P3, which corresponds to another predetermined value, in chamber 3.

In this way by operating with chambers, pistons and valves until chamber n is filled, a pressure Pn is obtained. By means of chambers made of suitable material, motor pumps, etc. a value Pn can be reached, which corresponds to a sufficiently high value, thus obtaining pressures of 20,000 or 50,000 kg/cm$^2$ or even higher.

After a part, or sample arranged in the inner pressurized chamber is subjected to pressure, this later shall be decreased. Said chamber shows a relief valve on the lid such that when it is operated no force can be excerted thereon without opening said relief valve of the chamber, thus discharging the same. With this system, the outer chamber is discharged and through the security valves the inner chambers begins to dischange since by dischanging or relieving a chamber, the relative pressure of the chambers arrenged in the inside tends to increase and therefore they begin to dischage. An embodiment of the invention for the process at low pressure corresponds to the incorporation of an electrical system, thus the process can be carried out from the outside.

The equipment will be as follows:

1. Motor Inlet Valve (VIM)

This valve operates by giving access to the fluid coming from the pump of the preceding or external chamber (directly from the outside if it is in the first stage) and said valve discharges in the following internal chamber out of the cylinder, when the pressure is inferior to a preedetermined value, or towards the inner part of the motor cylinder, if the pressure is equal or higher than the predetermined value. This valve operates by means of a differential pressure sensor (CDP) arranged between the internal chamber and the preceding or external chamber, and it is adjusted in order to pass the fluid into the motor if the predetermined value is reached.

2. Differential Pressure Sensor (CDP) A

This sensor operates by means of the deformation of chambar walls, which is due to the pressure. The higher the pressure is the bigger the deformation will be. Basically this sensor consists of a large rod arrenged in the inner part of the chamber having an end fixed to the chamber, whereas the other end corresponds to a free one. Due to the differential pressure between the chamber and the enviroment, the chamber is deformed and moves towards the free end, thus actuating the valve VIM that is fixedly to the chamber edge.

3.- Motor outlet valve (VEM)

This valve allows discharging the fluid from the motor. When the piston reaches its maximum level (stopper) the valve is actuated; thus allowing the discharge towards the preceding chamber. When the piston reaches a minimum level (another stopper) the valve is closed and generates a new filling.

4.- Discharge of security valve (VDS)

This valve is actuated only if the differential pressure sensor operates between the internal chamber and the preceding chamber, and said step is sufficient to deform the chamber. A thin rod is housed in the inner part of the chamber, such that one of its ends is fixed arranged to the chamber, whereas the other one controls a retention valve, which is fixedly arranged to the chamber, only if the chamber deformation is sufficiently noticeable.

5.- Simple Retention Valve (VRS)

this is a valve permitting the fluid flows in one direction only. A simple retention valve is arranged at the fluid inlet of the motor pump, at the fluid oulet, and the chamber inlet.. Due to the presence of said valve there is no higher pressure in an inner chamber than in the outer one.

6.- Motor Pump

Two pistons, each of them arranged within a cylinder, where said pistons are joined or a piston is linked to the opposite cylinder such that when a piston in its cylinder the other piston has to move in its cylinder too. Each chamber comprises a piston assembly.

7.- External cylinder rod

It corresponds to a rod, which is fixedly linked to a cylinder of the pump of the motor pump. Motor aolet valves (VEM) are actuated or deactivated fixedly arranged in the other cylinder.

**3.- Alternative methods to generating high pressure by iteration.**

There are certain alternative methods for increasing pressure by iteration. A further method is described hereunder.

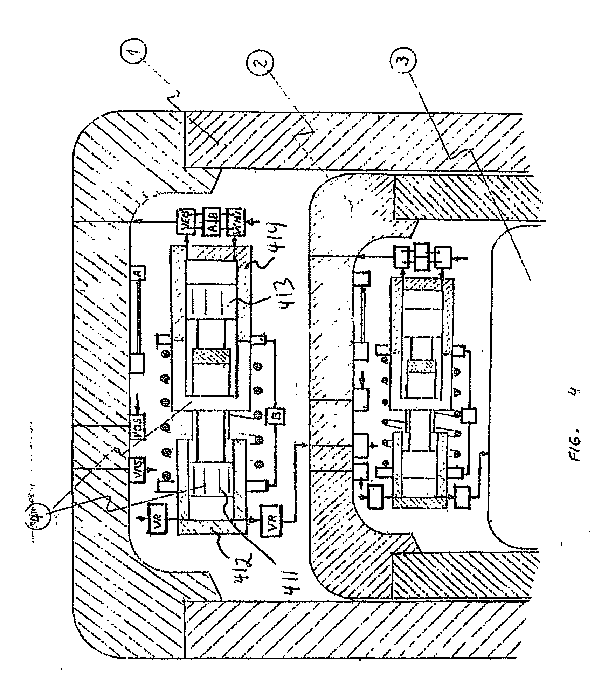

Figure 4, which is analogous to Figure 3, shows a different system having a fluid inlet to the chamber which is disconnected from the cylinder, Where a spring is used in order to extend the motor pump.
The external pump is actuated, thus coming fluid into chamber 1, which is the outermost chamber, i.e., the largest chamber comprising all other chambers, until reaching a pressure P1, and the pump continues pumping into chamber 1, but the pressure is not increased, since the existing pressure is higher than P1 and with said pressure the motor pump 1 is also actuated, being said motor pump within chamber 1. Both motor and pump are fed with the fluid housed in chamber 1, and the motor discharges said fluid towards the preceding chamber or the outside, whereas the pump discharges towards chamber 2, which is the innermost one. It shall be noted that the inlet of the pump of the motor pump 1 is not connected to the pumping coming from the preceding chamber or from the pump which arranged In the outside of the chambers.

The motor pump is actuated. It is filled, since it is the natural position thereof, since it comprises a spring compressed between the motor-acting cylinder and the pump-acting cylinder. The motor pump 1 is actuated, since the differential pressure sensor (CDP) is activated, and said sensor opens the motor outer valve (VEM) and closes the motor inlet valve (VIM).

The pump and the motor begin to empty, i.e." the motor pump 1 begins to discharge, until the motor outlet valve (VEM) is almost closed, and at that point the motor inlet valve (VIMI) is actuated by a motor-pump stopper sensor (CTM) at the end of the displacement, and therefore both the motor and the pump continues with the filling until the differential pressure sensor (CDP) is actuated again.

The motor inlet valve (VIMI) is closed by effect of the CDP and it is opened by effect of a rod. The VEM is actuated and opened by the CDP and it is closed by the bar effect.

As the motor pump 1 empties, the pressure in chamber 2 increases. After several pumping steps a pressure P2 is obtained, wich corresponds to another predetermined value. Likewise in the innermost chambers the motor pumps are filled with the fluid housed in the chamber, when a determined differential pressure is reached with the preceding chamber, and the pressure in the following chamber increases.

The simple retention valve (VRS), and the discharge or security valve existing in each chamber actuate by them when certain pressure requirements are fulfilled. Accordingly, when pressure increases in any chamber, also fluid comes into the innermost chamber, and it is impossible that an innermost chamber shows inferior pressure.

One option in the manufacture of pistons and cylinders is producing both cylinders rigidly joined there between or alternatively, the motor pistons can be manufactured rigidly joined to the pump cylinder and the motor cylinder is rigidly joined to the pump piston. Depending on the selected item, the spring will be always compressed or elongated.

Equipment

1. Motor-pumps springs

The equipment is almost the same as in the preceding procedure, and the only new element is the spring between the motor pump, wich can be arranged in different manners according to the motor pumps construction. This spring is housed between the two motor-pump cylinders, it is arranged in an extended manner or compressed such thar the motor pump has to be opened with the piston in the full position, if no force is exerted. Otherwise, if it is empty, the natural position is recommended.

2. Motor Inlet Valve (VIMI)

This valve is connected in order to be closed when the differential pressure sensor (CDP) operates between the chamber and the preceding one.

3. The differential pressure sensor (CDP) A

This sensor operates due the deformation of the chamber walls, which is the result of the received pressure. The higher the pressure is the bigger the deformation will be. Basically this sensor consists of a large rod arranged in the inner part of the chamber having an end fixed to the chamber, whereas the other end corresponds to a free one. Due to the differential pressure between the chamber and enviroment, the chamber is deformed and moves towards the free end, thus actuating the valve VIM that is fixedly arrenged to the chamber edge.

4. Motor pump stopper sensor (CTM) B

In this case a motor pump stopper sensor (CTM) B is provided, when the motor pump reaches an external stopper, which is activated to open or close the valve.

5.- Motor oulet valve (VEM)

This valve allows discharging the motor. When the piston reaches its maximum level (stopper) the valve is actuated, thus permitting the discharge towards the preceding chamber. When the piston reaches a minimum level (another stopper) the valve is closed and generates a new filling.

6. Discharge or security valve (VDS)

This valve is actuated only if the differential pressure sensor operates between the internal chamber and the preceding chamber, and said step is sufficient to deform the chamber. A thin rod is housed in the inner part of the chamber such that one of its ends is fixed to the chamber and the other end controls a retention valve, which is fixedly arranged to the chamber, only if chamber deformation is sufficiently noticeable.

7. Simple retention valve (VRS)

This is a valve that allows the fluids flows in one direction only. A simple retention valve is arranged at the fluid inlet of the the motor pump, at the fluid discharge and the chamber inlet. Due to the presence of said valve there is no higher pressure in an inner chamber than in the outer one.

8. Motor pumps

Two pistons and two cylinders, where said pistons are rigidly joined or a piston is linked to the opposite cylinder such that when a piston moves in its cylinder the other piston has to move in its cylinder too. Each chamber comprises a piston assambly.

9. External cylinder rod

It corresponds to a rod, which is fixedly linked to cylinder of the pump of the motor pump. Motor oulet valves (VEM) are actuated or deactived fixedly arranged in the other cylinder.

**4. Concentric chambers (Double or even more)**

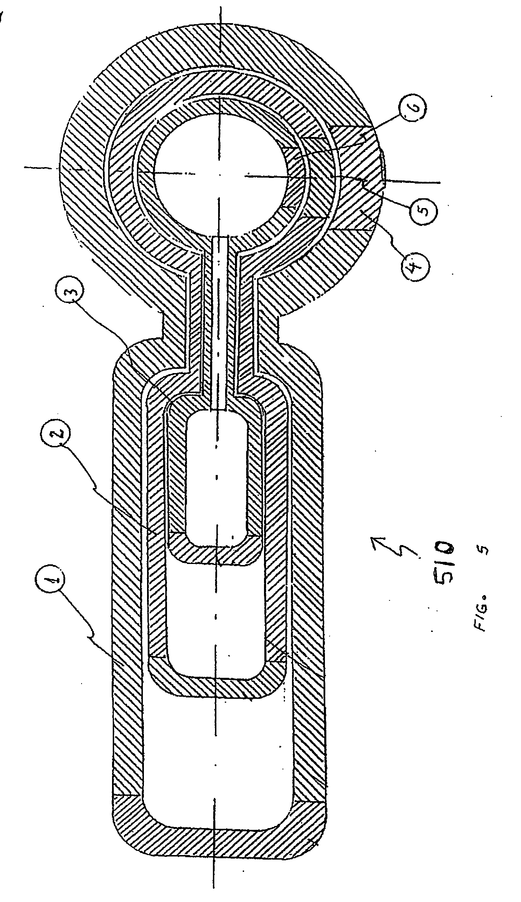

A version that does not require dismantling the whole pressure-increasing system in order to open the same and mount some parts is a double door, and it is even better if said door comprises a double chamber. A spherical multichamber is considered, which does not requiere a pressure-increasing system, since it is connected to a cylindrical multichamber, which does comprise pressure-increasing system. Accordingly, the spherical multichamber is only used to house parts to be compressed. See Figure 5.

Having similar diameters as cylindrical multichamber the spherical multichamber shows a grater resistance, or it permits providing a greater internal diameter, which would allow arranging bigger parts.

DESCRIPTION OF THE FIGURES

Figure 1 shows the corresponding chambers. A multichamber and a pressure-increasing system between each pair of chambers are provided.

Figure 2, schematically shows a multichamber, where the motor pumps are interconnected bellows:

Figure 3: is a description of th pressure-increasing system. A multichamber having a pressure-increasing system between each pair of chambers is provided.

Figure 4 is a description of the pressure-increasing system. A multichamber having a pressure-increasing system between each pair of chambers is provided. It shall be noted that each motor pump comprises a spring and the motor charge is not connected to the chamber fluid inlet.

Figure n° 5 is a description of a multichamber having double compartment, where one of them is directed to house the pressure increasing system, whereas the other one is intended to house the parts. It shall be noted that the compartment for housing the parts is preferentially spherical and it does not have gaps between the chambers.

**Claims**

**1.** Device for generating high pressures within a defined volume, said device comprises a plurality of concentric chambers so interconnected therebetween that they can pass fluid from a preceding chamber to a suceeding chamber which is directly external from said preceeding chamber or vice versa, **CHARACTERIZED in that** each of said chambers houses a hydraulic-motor-pumps system consisting of two cylinder(412, 414)-piston (411,413) assemblies, which are coupled in such a manner that when one piston moves in one direction, the other piston is actuated and it moves in the same direction, acting the first one as a motor (413) or propeller, and the second one acts as a pump (411) to impel the fluid, wherein both cylinders are at the same pressure as the chamber housing them (1), which activates the propelling piston and allows the transfer of the generated energy to the pump piston, and this piston increases the pressure of the fluid comprised in the cylinder to impel it towards the directly internal chamber (2).

**2.** Device for generating high pressures according to claim 1, **CHARACTERIZED in that** it comprises a tube for the fluid inlet to any chamber until the pressure in the inside exceeds a predetermined pressure Pi, and this pressure is received by the differential pressure sensor, which opens a valve allowing the fluid inlet to the propelling cylinder-piston (413-414) and closes an outlet valve of said propelling assembly; once the propelling system is filled with pressurized fluid, a motor-pump extension stopper-indicating device closes the inlet valve to the propelling assembly, opening its outlet valve, which is connected to and discharges towards the directly external chamber, whereas the flow in the cylinder-piston assembly (411-412) acting as pump is controlled by simple retention valves that allow the discharge from said cylinder towards the directly internal chamber.

**3.** Device for generating high pressures according to claim 1 or 2, **CHARACTERIZED in that** for the operation thereof it uses a spring housed between the two cylinders of the motor-pump to extend the motor-pump.

**4.** Device for generating high pressures within a defined volume, said device comprises a plurality of concentric chambers so interconnected therebetween that they can pass fluid from a preceeding chamber to a suceeding chamber which is directly external from said preceeding chamber or vice versa, **CHARACTERIZED in that** each of said chamber houses an hydraulic-motor-pumps system consisting of two bellows (210, 220)

**5.** Device for generating high pressures according to any of the preceding claims, **CHARACTERIZED in that** the motor-pumps systems are mounted in double or triple chambers (510) such that motor-pumps are housed in a cylindrical part of the chambers only (left side of 510) and the other part of said chambers having a spherical shape (right side of 510) is only intended for housing parts or samples.

**Patentansprüche**

**1.** Vorrichtung zur Erzeugung von hohen Drücken innerhalb eines definierten Volumens, wobei die Vorrichtung eine Vielzahl konzentrischer Kammern besitzt, die derart miteinander verbunden sind, dass ein Fluid von einer vorhergehenden Kammer zu einer nachfolgenden Kammer fließen kann, die sich direkt extern an der vorhergehenden Kammer befindet, oder umgekehrt, **dadurch GEKENNZEICHNET, dass** in jeder der Kammern ein hydraulisches Motorpumpensystem untergebracht ist, das aus zwei Zylinder (412, 414) - Kolben (411, 413) - Aggregaten besteht, die derart miteinander gekoppelt sind, dass bei Bewegung eines Kolbens in eine Richtung der andere Kolben betätigt wird und sich in dieselbe Richtung bewegt, wobei der erste Kolben als Motor (413) oder Propeller dient und der zweite Kolben als Pumpe (411) dient, um das Fluid anzutreiben, wobei beide Zylinder den gleichen Druck aufweisen wie die Kammer, in der sie (1) untergebracht sind, die den antreibenden Kolben aktiviert und die Übertragung der erzeugten Energie zu dem Pumpenkolben ermöglicht, und dieser Kolben erhöht den Druck des Fluids im Zylinder und treibt es direkt in die interne Kammer (2).

**2.** Vorrichtung zur Erzeugung von hohen Drücken nach Anspruch 1, **dadurch GEKENNZEICHNET, dass** sie ein Rohr für den Fluideintritt in eine Kammer besitzt, bis der Druck im Inneren einen vorher festgelegten Druck Pi übersteigt, und dieser Druck wird von dem Differenzdrucksensor empfangen, der ein Ventil öffnet, das den Fluideintritt in den antreibenden ZylinderKolben (413 - 414) erlaubt, und ein Austrittsventil des Antriebsaggregates schließt ; sobald das Antriebssystem mit dem unter Druck stehenden Fluid gefüllt ist, schließt eine Verschlussanzeige-Vorrichtung der Motorpumpenverlängerung das Eintrittsventil zu dem Antriebsaggregat und öffnet sein Austrittsventil, das mit der direkten externen Kammer verbunden ist und dort hinein abführt, während die Durchflussmenge in dem Zylinder - Kolben Aggregat (411 - 412), das als Pumpe dient, durch einfache Rückhalteventile gesteuert wird, die die Abführung aus dem Zylinder in die direkte interne Kammer erlauben.

**3.** Vorrichtung zur Erzeugung von hohen Drücken nach Anspruch 1 oder 2, **dadurch GEKENNZEICHNET, dass** für deren Betrieb eine Feder verwendet wird, die sich zwischen den beiden Zylindern der Motorpumpe befindet, um die Motorpumpe zu verlängern.

**4.** Vorrichtung zur Erzeugung von hohen Drücken innerhalb eines definierten Volumens, wobei die Vorrichtung eine Vielzahl konzentrischer Kammern besitzt, die derart miteinander verbunden sind, dass ein Fluid von einer vorhergehenden Kammer zu einer nachfolgenden Kammer fließen kann, die sich direkt extern an der vorhergehenden Kammer befindet, oder umgekehrt, **dadurch GEKENNZEICHNET, dass** in jeder der Kammern ein hydraulisches Motorpumpensystem untergebracht ist, das aus zwei Blasebälgen besteht (210, 220).

**5.** Vorrichtung zur Erzeugung von hohen Drücken nach einem der vorhergehenden Ansprüche, **dadurch gekennzeichnet, dass** die Motorpumpensysteme in doppelten oder dreifachen Kammern (510) montiert sind, so dass die Motorpumpen nur in einem zylindrischen Teil der Kammern (linke Seite von 510) untergebracht sind, und der andere Teil der Kammern, der kugelförmig (rechte Seite von 510) ist, nur der Unterbringung von Teilen oder Proben dient.

**Revendications**

**1.** Dispositif pour générer de hautes pressions dans un volume défini, ledit dispositif comprend une pluralité de chambres concentriques interconnectées entre elles de sorte qu'elles peuvent laisser passer du fluide d'une chambre précédente à urne chambre successive qui est directement externe par rapport à ladite chambre précédente ou vice versa, **caractérisé en ce que** chacune desdites chambres loge un système de motopompes hydrauliques constitué de deux ensembles de piston (411, 413) - cylindre (412, 414) qui sont couplés de sorte que lorsqu'un piston se déplace dans une direction, l'autre piston est actionné et il se déplace dans la même direction, le premier agissant comme un moteur (413) ou propulseur, et le second agit comme une pompe (411) pour propulser le fluide, dans lequel les deux cylindres sont à la même pression que la chambre qui les (1) loge, qui active le piston moteur et permet le transfert de l'énergie générée au piston de la pompe, et ce piston augmente la pression du fluide compris dans le cylindre pour le propulser vers la chambre directement interne (2).

**2.** Dispositif pour générer de hautes pressions selon la revendication 1, **caractérisé en ce qu'**il comprend un tube pour l'entrée de fluide vers l'une quelconque des chambres jusqu'à ce que la pression à l'intérieur dépasse une pression Pi prédéterminée, et que cette pression soit reçue par le capteur de pression différentielle qui ouvre une soupape permettant l'entrée de fluide dans le piston- cylindre (413 - 414) et ferme une soupape de sortie dudit ensemble de propulsion ; une fois que le système de propulsion est rempli avec le fluide sous pression, un dispositif d'indication de butée d'extension de motopompe ferme la soupape d'entrée vers l'ensemble de propulsion, ouvrant sa soupape de sortie, qui est raccordée à et se décharge vers la chambre directement externe, alors que l'ensemble de piston - cylindre (411 - 412) servant de pompe est contrôlé par de simples soupapes de retenue qui permettent la décharge dudit cylindre vers la chambre directement interne.

**3.** Dispositif pour générer de hautes pressions selon la revendication 1 ou 2, **caractérisé en ce que** pour son fonctionnement, il utilise un ressort logé entre les deux cylindres de la motopompe pour étendre la motopompe.

**4.** Dispositif pour générer de hautes pressions dans un volume défini, ledit dispositif comprend une pluralité de chambres concentriques interconnectées entre elles de sorte qu'elles peuvent laisser passer le fluide d'une chambre précédente à une chambre successive qui est directement externe de ladite chambre précédente ou vice versa, **caractérisé en ce que** chacune desdites chambre loge un système de motopompes hydrauliques constituét de deux soufflets (210, 220).

**5.** Dispositif pour générer de hautes pressions selon l'une quelconque des revendications précédentes, **caractérisé en ce que** les systèmes de motopompes sont montés dans des chambres doubles ou triples (510) de sorte que les motopompes sont logées dans une partie cylindrique des chambres uniquement (côté gauche de 510) et l'autre partie desdites chambres ayant une forme sphérique (côté droit de 510) est iniquement prévue pour loger des parties ou échantillons.

FIG. 1

12

Fig. 2

13

EP 1 795 334 B1

F/G. 3

14

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2544414 A
- US 3379043 A